# EUROPEAN PATENT APPLICATION

(11) **EP 4 694 464 A1**
(43) Date of publication of application: **11.02.2026**
(21) Application number: 23941466.7
(22) Date of filing: 12.06.2023
(51) Int. Cl.: H04W 72/0457, H04W 24/08, H04W 76/15, H04W 76/34

(54) **USER EQUIPMENT, NODE, AND COMMUNICATION METHOD**

(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2023/021699
(87) International publication number: WO 2024/257154

(57) **Abstract**

A user equipment for performing wireless communication with a node using carrier aggregation in a mobile communication system includes: a receiver configured to receive, from the node, information indicating a radio quality condition to be satisfied for the user equipment to execute deactivation processing for a secondary cell configured for the user equipment; and a controller configured to measure radio quality and evaluate whether the radio quality condition has been satisfied. The controller is configured to execute the deactivation processing for the secondary cell in response to the radio quality condition having been satisfied.

## Description

### TECHNICAL FIELD

The present disclosure relates to a user equipment, a node, and a communication method.

### BACKGROUND OF INVENTION

The 3rd generation partnership project (3GPP (registered trademark), hereinafter the same), which is a standardization project for mobile communication systems, defines the technical specifications of Carrier Aggregation (CA). CA can be configured for a User Equipment (UE) through a node of a network of a mobile communication system (also simply referred to as a "node").

In CA, a plurality of Component Carriers (CCs) corresponding to a plurality of serving cells are aggregated, so that the UE can simultaneously perform reception or transmission over the plurality of CCs. The plurality of CCs may be contiguous or discontinuous in the frequency direction. One serving cell is referred to as a Primary Cell (PCell), and a set of serving cells is formed by configuring one or more Secondary Cells (SCells) together with the PCell for a UE.

In a case where CA has been configured, the UE has one Radio Resource Control (RRC) connection to the network. SCells can be added and deleted through RRC signaling. SCells can be activated and deactivated through a Medium Access Control (MAC) Control Element (CE).

Deactivation of SCells in CA is generally performed with the following procedure. First, the UE transmits a measurement report message including a measurement result of radio quality of each cell to a node. Second, the node deactivates SCells of the UE using a MAC CE based on the measurement report message. Deactivation of an SCell causes the SCell to transition from an active state to an inactive state, thereby stopping wireless communication that uses the SCell.

Such control of deactivation poses the problem that it is difficult to shorten a time taken until wireless communication that uses the SCell is stopped after radio quality associated with an SCell in the UE deteriorates.

### CITATION LIST

### NON-PATENT LITERATURE

Non-Patent Document 1: 3GPP technical specification: TS 38.300 V17.3.0 (2022-12)

### SUMMARY

In a first aspect, a user equipment is a user equipment for performing wireless communication with a node using carrier aggregation in a mobile communication system includes: a receiver configured to receive, from the node, information indicating a radio quality condition to be satisfied for the user equipment to execute deactivation processing for a secondary cell configured for the user equipment; and a controller configured to measure radio quality and evaluate whether the radio quality condition has been satisfied. The controller is configured to execute the deactivation processing for the secondary cell in response to the radio quality condition having been satisfied.

In a second aspect, a node is a node for performing wireless communication with a user equipment using carrier aggregation in a mobile communication system, and includes: a controller configured to configure a secondary cell for the user equipment; and a transmitter configured to transmit, to the user equipment, information indicating a radio quality condition to be satisfied for the user equipment to execute deactivation processing for the secondary cell.

In a third aspect, a communication method is a communication method used in a user equipment configured to perform wireless communication with a node using carrier aggregation in a mobile communication system, and includes the steps of: receiving, from the node, information indicating a radio quality condition to be satisfied for the user equipment to execute deactivation processing for a secondary cell configured for the user equipment; measuring radio quality and evaluating whether the radio quality condition has been satisfied; and executing the deactivation processing for the secondary cell in response to the radio quality condition having been satisfied.

In a fourth aspect, a communication method is a communication method used in a node configured to perform wireless communication with a user equipment using carrier aggregation in a mobile communication system, and includes the steps: configuring a secondary cell for the user equipment; and transmitting, to the user equipment, information indicating a radio quality condition to be satisfied for the user equipment to execute deactivation processing for the secondary cell.

### BRIEF DESCRIPTION OF THE DRAWINGS

FIG. 1 is a diagram illustrating a configuration example of a mobile communication system according to an embodiment.
FIG. 2 is a diagram illustrating a configuration example of a protocol stack of a U-plane radio interface that handles data.
FIG. 3 is a diagram illustrating a configuration example of a protocol stack of a C-plane radio interface that handles signaling (control signal).
FIG. 4 is a diagram for describing a terahertz (THz) wave cell according to the embodiment.
FIG. 5 is a diagram for describing Carrier Aggregation (CA) according to the embodiment.
FIG. 6 is a diagram illustrating a general procedure for adding and activating Secondary Cells (SCells).
FIG. 7 is a diagram illustrating a general procedure for deactivating an SCell.
FIG. 8 is a diagram illustrating a configuration example of a UE (User Equipment) according to the embodiment.
FIG. 9 is a diagram illustrating a configuration example of a node according to the embodiment.
FIG. 10 is a diagram illustrating an operation example of a system according to a first embodiment.
FIG. 11 is a diagram for describing a bandwidth part (BWP).
FIG. 12 is a diagram illustrating an operation example of a system according to a second embodiment.
FIG. 13 is a diagram illustrating a specific example of a reference signal (Fast tracking RS) according to a third embodiment.
FIG. 14 is a diagram illustrating an operation example of the system according to the third embodiment.

### DESCRIPTION OF EMBODIMENTS

A mobile communication system according to embodiments will be described below with reference to the drawings. In the description of the drawings, the same or similar parts are denoted by the same or similar reference signs.

### (1) First Embodiment

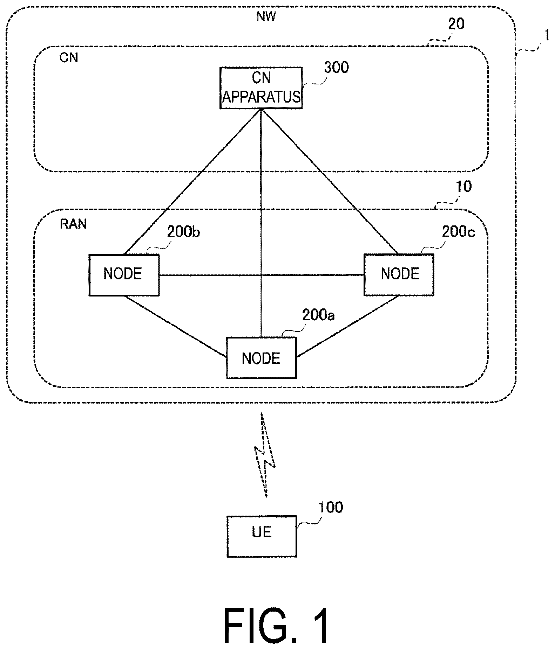

A first embodiment is described with reference to FIGs. 1 to 10.

### (1.1) System Configuration Example

FIG. 1 is a diagram illustrating a configuration example of a mobile communication system according to an embodiment. The mobile communication system according to the embodiment is a system conforming to the 3GPP standard. For example, the mobile communication system according to the embodiment may be a 5th generation (5G) system or a 6th generation (6G) system.

The mobile communication system includes a network (NW) 1 and a user equipment (UE) 100. The UE 100 is a mobile communication apparatus and performs wireless communication with the NW 1. The UE 100 may be an apparatus used by a user and may be, for example, a mobile phone terminal (including a smartphone), a tablet terminal, a laptop personal computer (PC), a communication module (including a communication card or chipset), a sensor or an apparatus provided in a sensor, a vehicle or an apparatus provided in a vehicle (a vehicle UE), or an aircraft or an apparatus provided in an aircraft (an aerial UE).

The NW 1 includes a Radio Access Network (RAN) 10 and a Core Network (CN) 20. When the mobile communication system is a 5th Generation System (5GS), the RAN 10 is referred to as a Next Generation Radio Access Network (NG-RAN) and the CN 20 is referred to as a 5G Core Network (5GC).

The RAN 10 includes a plurality of nodes 200 (nodes 200a to 200c in the illustrated example). The nodes 200 are connected to each other via inter-node interfaces. The node 200 is also referred to as a base station. The node 200 may be configured (i.e., functionally divided) into a Central Unit (CU) and a Distributed Unit (DU), and both units may be connected by a fronthaul interface. When the mobile communication system is a 5GS, the node 200 is referred to as a gNB, the inter-node interface is referred to as an Xn interface, and the fronthaul interface is referred to as an F1 interface.

Each node 200 manages one or more cells. The node 200 performs wireless communication with the UE 100 that has established a connection with its own cell. Each node 200 has a Radio Resource Management (RRM) function, a routing function for user data (also simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency (also simply referred to as a "frequency").

The CN 20 includes a CN apparatus 300. The CN apparatus 300 may include a control plane (C-plane) apparatus associated with the C-plane, and a user plane (U-plane) apparatus associated with the U-plane. The C-plane apparatus performs various mobility control, paging, and the like for the UE 100. The C-plane apparatus communicates with the UE 100 using Non-Access Stratum (NAS) signaling. The U-plane apparatus controls data transfer. When the mobile communication system is a 5GS, the C-plane apparatus is referred to as an Access and Mobility Management function (AMF), the U-plane apparatus is referred to as a User Plane Function (UPF), and the interface between the node 200 and the CN apparatus 300 is referred to as an NG interface.

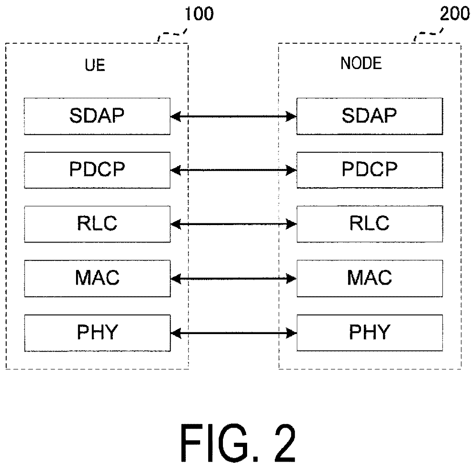

FIG. 2 is a diagram illustrating a configuration example of a protocol stack of a U-plane radio interface that handles data.

The protocol of the U-plane radio interface includes, for example, a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the node 200 via a physical channel. Note that the PHY layer of the UE 100 receives Downlink Control Information (DCI) transmitted from the node 200 on a Physical Downlink Control CHannel (PDCCH). Specifically, the UE 100 blind-decodes the PDCCH using a Radio Network Temporary Identifier (RNTI) and acquires successfully decoded DCI as DCI addressed to the UE 100. The DCI transmitted from the node 200 has CRC parity bits scrambled by the RNTI added thereto.

The MAC layer performs data priority control and retransmission processing using Hybrid ARQ (HARQ), and the like. Data and control information are transmitted between the MAC layer of UE 100 and the MAC layer of node 200 via a transport channel. The MAC layer of the node 200 includes a scheduler. The scheduler determines the uplink and downlink transport format (a transport block size and a Modulation and Coding Scheme (MCS)) and the resources to be allocated to the UE 100.

The RLC layer transmits data to the RLC layer on the reception end by using functions of the MAC layer and the PHY layer. Data and control information are transmitted between the RLC layer of the UE 100 and the RLC layer of the node 200 via a logical channel.

The PDCP layer performs header compression/decompression, encryption/decryption, and the like.

The SDAP layer performs mapping between an IP flow, which is a unit for QoS control by the CN 20, and a radio bearer, which is a unit for QoS control by an Access Stratum (AS). Note that, when the RAN is connected to the EPC, the SDAP need not be provided.

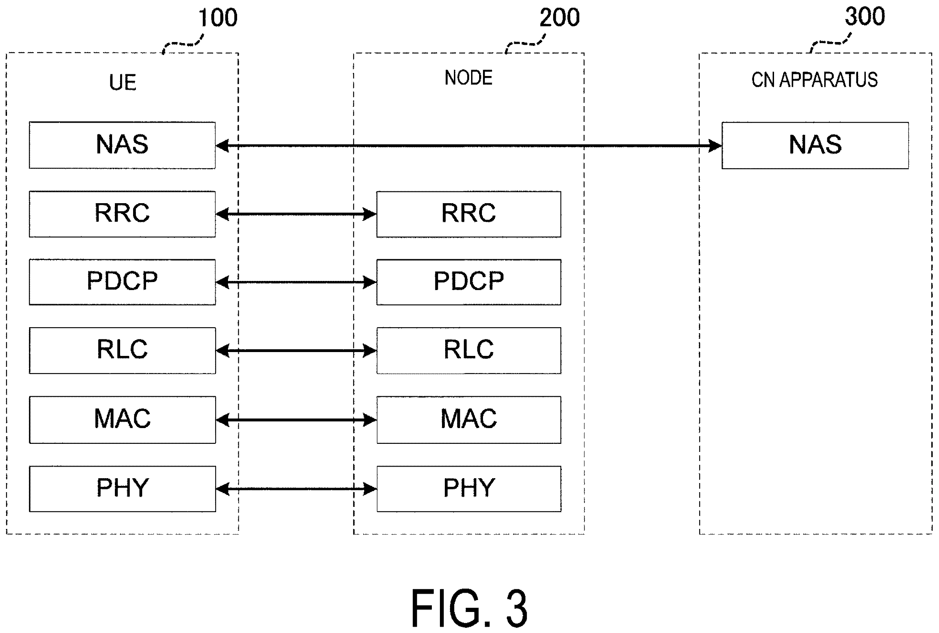

FIG. 3 is a diagram illustrating a configuration example of a protocol stack of a C-plane radio interface that handles signaling (control signal).

The protocol stack of the C-plane radio interface includes, for example, a Radio Resource Control (RRC) layer and a Non-Access Stratum (NAS) layer instead of the SDAP layer illustrated in FIG. 2.

RRC signaling for various configuration is transmitted between the RRC layer of the UE 100 and the RRC layer of the node 200. The RRC layer controls a logical channel, a transport channel, and a physical channel according to establishment, re-establishment, and release of a radio bearer. When there is a connection (RRC connection) between the RRC of the UE 100 and the RRC of the node 200, the UE 100 is in an RRC connected state. When there is no connection (RRC connection) between the RRC of the UE 100 and the RRC of the node 200, the UE 100 is in an RRC idle state. When the connection between the RRC of the UE 100 and the RRC of the node 200 is suspended, the UE 100 is in an RRC inactive state.

The NAS layer (also referred to simply as an "NAS") that is positioned upper than the RRC layer performs session management, mobility management, and the like. NAS signaling is transmitted between the NAS layer of the UE 100 and the NAS layer of the CN apparatus 300. Note that the UE 100 includes an application layer other than the protocol of the radio interface. Each layer lower than the NAS layer will be referred to as an AS layer (also referred to simply as an "AS").

### (1.2) CA That Uses Terahertz Wave Cell

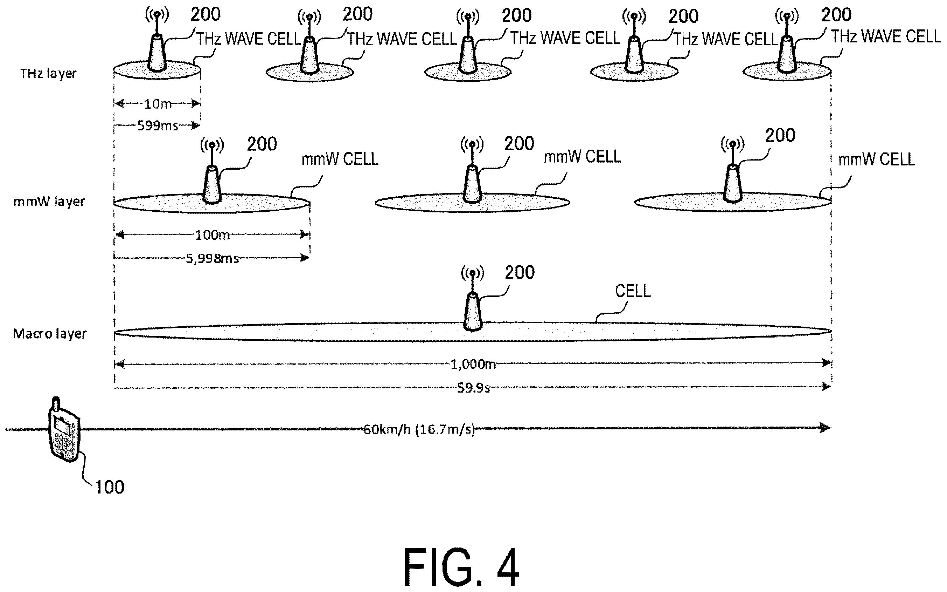

FIG. 4 is a diagram for describing a terahertz (THz) wave cell according to the embodiment.

The mobile communication system according to the embodiment may be a 6G system. 6G is assumed to utilize terahertz (THz) waves. A cell operated by THz waves is referred to as a THz wave cell. Compared with millimeter waves (mmW), THz waves have a stronger tendency to have a straighter direction of travel, have a higher free space loss, and are more susceptible to the effects of the atmosphere and precipitation. Therefore, the THz wave cell can be an extremely small cell.

In the illustrated example, the diameter of the coverage area of the THz wave cell is approximately 10 m, the diameter of the coverage area of the mmW cell operated at mmW is approximately 100 m, and the diameter of the coverage area of the macro cell is approximately 1000 m. Under such assumptions, for example, the UE 100 moving at 60 [km/s] passes through the coverage area of each THz wave cell in approximately 599 [ms].

Carrier Aggregation (CA) is one of methods for stably controlling compact size cells in a mobile communication system. In the embodiment, it is assumed that THz wave cells are used as secondary cells (SCells) of CA. It is assumed that a Primary Cell (PCell) of CA is a macro cell, but the PCell may be a mmW cell.

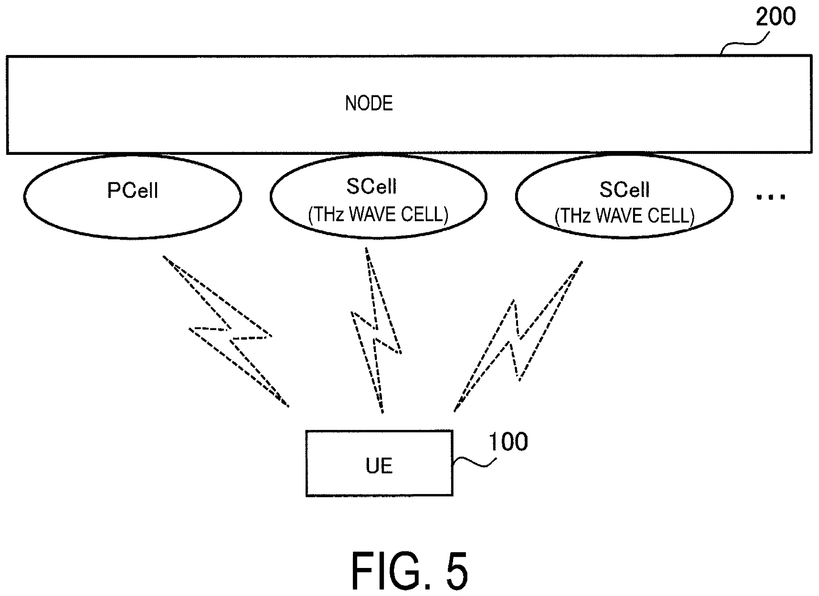

FIG. 5 is a diagram for describing Carrier Aggregation (CA) according to the embodiment.

CA can be configured for the UE 100, which is in an RRC connected state, through the node 200. In the CA, a plurality of Component Carriers (CCs) corresponding to a plurality of serving cells are aggregated, so that the UE can simultaneously perform reception or transmission over the plurality of CCs. The plurality of CCs may be contiguous or discontinuous in the frequency direction. One serving cell is referred to as a Primary Cell (PCell), and a set of serving cells is formed by configuring one or more Secondary Cells (SCells) together with the PCell to a UE. When CA has been configured, the UE 100 has one RRC connection to the network 1. SCells can be added and deleted through RRC signaling. SCells can be activated and deactivated through a Medium Access Control (MAC) Control Element (CE).

The mobile communication system supports activation and deactivation of cells to enable reduction in the power consumption of the UE 100 when CA has been configured. When an SCell is inactive, the UE 100 does not need to receive a PDCCH or a Physical Downlink Shared Channel (PDSCH) over the SCell and cannot perform uplink transmission over the SCell. The UE 100 also does not need to execute Channel Quality Indicator (CQI) measurement for the SCell in the inactive state. On the other hand, when an SCell is in the active state, the UE 100 receives a PDSCH and a PDCCH over the SCell. The UE 100 can execute CQI measurement for the SCell in the active state.

Note that, when reconfiguring a set of serving cells, the node 200 first activates or deactivates SCells added to the set, and does not change the activation state (activation or deactivation) of SCells remaining in the set (that have not been changed or reconfigured).

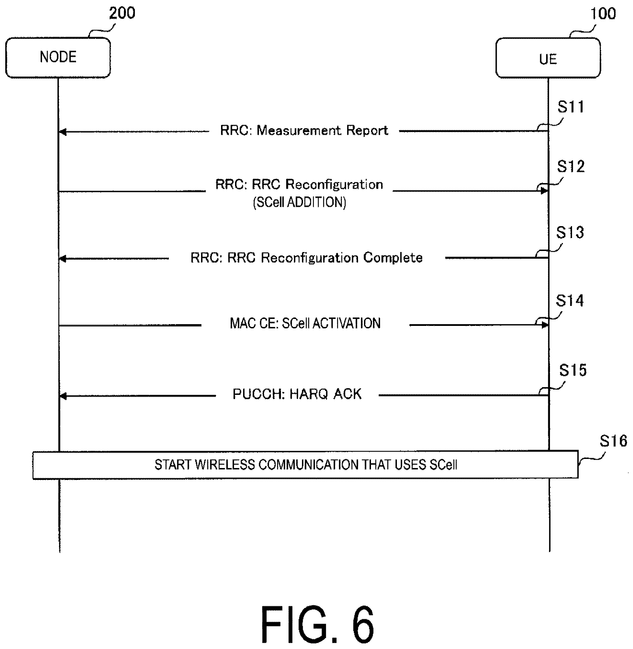

FIG. 6 is a diagram illustrating a general procedure for adding and activating SCells.

In step S11, the UE 100 transmits a Measurement Report message including a measurement result of radio quality of each cell to the node 200 over, for example, a PCell. The radio quality only needs to be an index relating to radio quality, and is, for example, at least one selected from the group consisting of Reference Signal Received Power (RSRP), Reference Signal Received Quality (RSRQ), and a Signal to Interference & Noise Ratio (SINR). The Measurement Report message is an RRC message transmitted and received in the RRC layer. The Measurement Report message may be transmitted periodically or in response to an event trigger. The node 200 receives the Measurement Report message.

In step S12, the node 200 determines to configure (add) the SCell for the UE 100 based on the Measurement Report message, and transmits, to the UE 100, an RRC Reconfiguration message for adding the SCell to the UE 100 over, for example, the PCell. The RRC Reconfiguration message is transmitted and received in the RRC layer. The UE 100 receives the RRC Reconfiguration message.

In step S13, the UE 100 transmits an RRC Reconfiguration Complete message indicating that addition of the SCell based on the RRC Reconfiguration message has been completed to the node 200 over, for example, the PCell. The RRC Reconfiguration Complete message is transmitted and received in the RRC layer. The node 200 receives the RRC Reconfiguration Complete message. At this stage, the added SCell is in an inactive state.

In step S14, the node 200 transmits, to the UE 100, a MAC CE for activating the SCell added to the UE 100 over, for example, the PCell. The MAC CE is transmitted and received in the MAC layer. The UE 100 starts activating the SCell upon receiving the MAC CE. Upon starting the activation of the SCell, the UE 100 receives a reference signal of the SCell and performs Channel State Information (CSI) measurement, Automatic Gain Control (AGC), and beam management to prepare for communication.

In step S15, the UE 100 transmits a HARQ ACK indicating successful reception of the MAC CE to the node 200 over, for example, a PUCCH of the PCell. The node 200 receives the HARQ ACK.

In step S16, the UE 100 and the node 200 start wireless communication that uses the SCell when the SCell enters an active state in the UE 100.

According to such a procedure, it takes, for example, about 35 ms until the UE 100 is able to use the SCell after the radio quality of the SCell enters a state where communication is possible. When the SCell is a THz wave cell, the coverage area of the SCell becomes much narrower due to the influence of shielding or the like and thus the available time of the SCell is shorter. Therefore, in the procedure in FIG. 6, it takes a long time until activation of the SCell is completed, and therefore there is the problem that the time during which data can actually be transmitted and received over the SCell is short.

Here, the following extended functions have been introduced up to Release 17 of the 3GPP standard as techniques capable of speeding up activation of an SCell.

A first extended function is direct SCell activation. In direct SCell activation, the node 200 can designate an active state as the initial state of an SCell when adding the SCell to the UE 100 using an RRC message. Thus, the MAC CE for SCell activation in FIG. 6 does not need to be transmitted and received, and SCell activation can be sped up.

A second extended function is a technique called a dormant BWP. The node 200 can configure bandwidth parts (BWPs) in a dormant state for SCells. If an active BWP for an activated SCell is a BWP in the dormant state, the UE 100 stops PDCCH monitoring and sounding reference signal (SRS)/PUSCH/PUCCH transmission over the SCell, but continues execution of CSI measurement, AGC, and beam management. PDCCH/Downlink Control Information (DCI) is used to control entering and leaving a dormant BWP for the SCell. Note that the BWP in the dormant state is one of dedicated BWPs of the UE 100 that the network 1 has configured via dedicated RRC signaling. An example where the dormant BWP is used will be described in a second embodiment.

A third extended function is a method of configuring, for an SCell, an aperiodic CSI-RS for tracking (synchronization) for fast SCell activation. Such an aperiodic CSI-RS can support AGC and time/frequency synchronization. A MAC CE is used to trigger (start) SCell activation and trigger an aperiodic CSI-RS for a deactivated SCell.

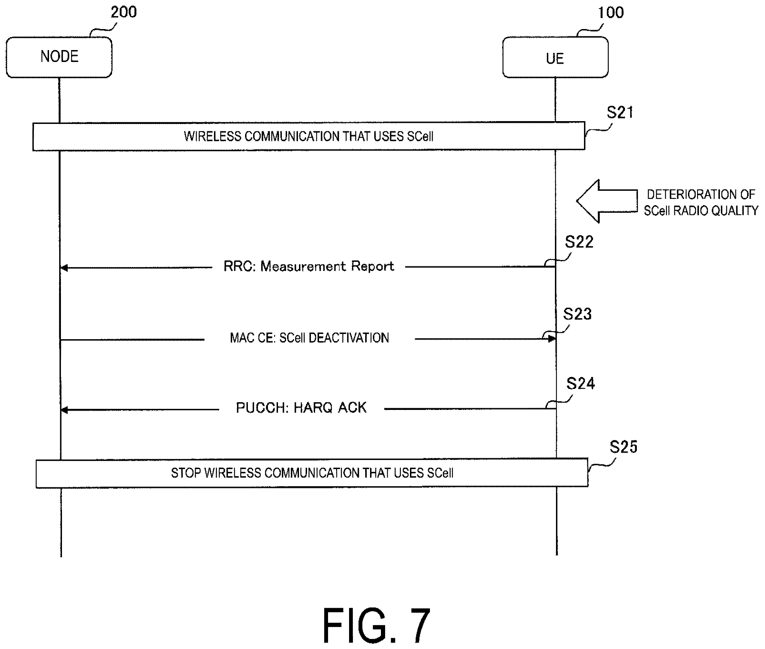

FIG. 7 is a diagram illustrating a general procedure for deactivating an SCell.

In step S21, the SCell in the UE 100 is in an active state, and the UE 100 and the node 200 are performing wireless communication that uses the SCell.

Here, a situation that the radio quality of the SCell deteriorates in the UE 100, and it becomes difficult to continue wireless communication that uses the SCell is assumed.

In step S22, the UE 100 transmits a Measurement Report message including a measurement result of radio quality of each cell to the node 200 over, for example, the PCell. The node 200 receives the Measurement Report message.

In step S23, the node 200 recognizes deterioration of the radio quality of the SCell in the UE 100 based on the Measurement Report message, and transmits a MAC CE for deactivating the SCell (SCell deactivation MAC CE) in the UE 100 to the UE 100 over, for example, the PCell. The UE 100 receives the MAC CE.

In step S24, the UE 100 transmits a HARQ ACK indicating successful reception of the MAC CE to the node 200 over, for example, a PUCCH of the PCell. The node 200 receives the HARQ ACK.

In step S25, the UE 100 deactivates the SCell in response to reception of the MAC CE in step S23. For example, the UE 100 stops PDCCH monitoring and CQI measurement for the SCell. On the other hand, the node 200 stops DL transmission processing (PDCCH transmission and PDSCH transmission) over the SCell of the UE 100 in response to reception of the HARQ ACK in step 24. As a result, wireless communication that uses the SCell is stopped.

In the operation illustrated in FIG. 7, communication over the SCell becomes impossible at a point of time at which the SCell radio quality in the UE 100 deteriorates. However, the node 200 cannot recognize deterioration of the SCell radio quality until the Measurement Report message in step S22 is received, and can continue DL transmission processing even after the SCell radio quality deteriorates. The UE 100 may continue PDCCH monitoring (and CQI measurement) over the SCell until receiving the MAC CE in step S23. According to such an operation, there is a problem that resources and power consumption are wasted.

For example, delay that occurs until the Measurement Report message is transmitted after the SCell radio quality in the UE 100 deteriorates may be approximately 10 ms, and delay that occurs until the SCell deactivation MAC CE is transmitted to the UE 100 after the node 200 receives the Measurement Report message may be approximately 10 ms. In this case, resources and power consumption may be wasted in a time of approximately 20 ms. Accordingly, it is desirable that the SCell can be promptly deactivated when the radio quality of the SCell does not satisfy predetermined quality.

### (1.3) Configuration Example of User Equipment

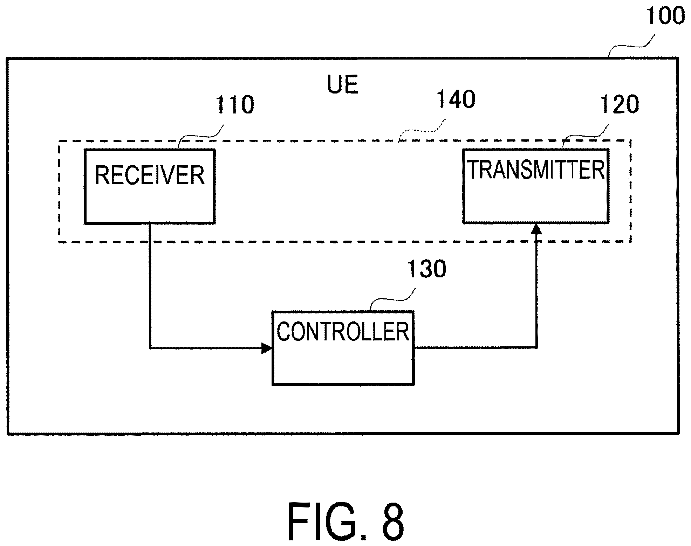

FIG. 8 is a diagram illustrating a configuration example of the UE 100 (user equipment) according to the embodiment.

The UE 100 includes a receiver 110, a transmitter 120, and a controller 130. The receiver 110 and the transmitter 120 constitute a wireless communicator 140 that performs wireless communication with the node 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130. The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processing in the UE 100. The operations of the UE 100 described above and below may be also operations performed under control of a controller 230. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

The UE 100 configured as such performs wireless communication with the node 200 using CA. The receiver 110 receives, from the node 200, information indicating a radio quality condition to be satisfied for the UE 100 to execute deactivation processing for the SCell configured for the UE 100. The controller 130 measures radio quality of the SCell and evaluates whether the radio quality condition is satisfied. The controller 130 executes deactivation processing for the SCell in response to the radio quality condition having been satisfied.

Thus, the UE 100 can autonomously perform deactivation processing for the SCell when the radio quality of the SCell satisfies the radio quality condition (e.g., the radio quality deteriorates compared to predetermined quality). On the other hand, in the related art, the node 200 needs to recognize that the radio quality of the SCell has satisfied the radio quality condition based on a Measurement Report message, and instruct the UE 100 to deactivate the SCell.

In the embodiment, the radio quality condition is configured for the UE 100, and the UE 100 side can determine whether the radio quality condition has been satisfied, so that the UE 100 can autonomously perform deactivation processing for the SCell without transmitting a Measurement Report message to the node 200. Accordingly, deactivation of the SCell can be sped up.

In the first embodiment, the deactivation processing includes processing of causing the SCell in the active state to transition to the inactive state. The activation processing may include processing of causing a BWP in the non-dormant state in the SCell to transition to the dormant state. An example where the dormant BWP is used will be described in the second embodiment.

In the embodiment, the transmitter 120 transmits a notification relating to the deactivation processing to the node 200 in response to the radio quality condition having been satisfied. Thus, the node 200 can recognize based on the notification that the UE 100 performs the deactivation processing. Accordingly, wireless communication that uses the SCell can be smoothly stopped. The notification may be a newly introduced MAC CE. The MAC CE is transmitted and received in the MAC layer, so that high-speed transmission processing can be performed compared to the Measurement Report message.

In the embodiment, the transmitter 120 transmits a notification relating to the deactivation processing to the node 200 over the PCell. Thus, the notification can be transmitted to the node 200 even when the radio quality of the SCell deteriorates. Accordingly, wireless communication that uses the SCell can be smoothly and quickly stopped.

In the embodiment, the controller 130 stops PDCCH monitoring (and CQI measurement) for the SCell when the radio quality condition is satisfied or when an acknowledgment (HARQ ACK) to the notification relating to the deactivation processing is received from the node 200. Thus, the above-described waste of resources and power consumption can be suppressed.

### (1.4) Configuration Example of Node

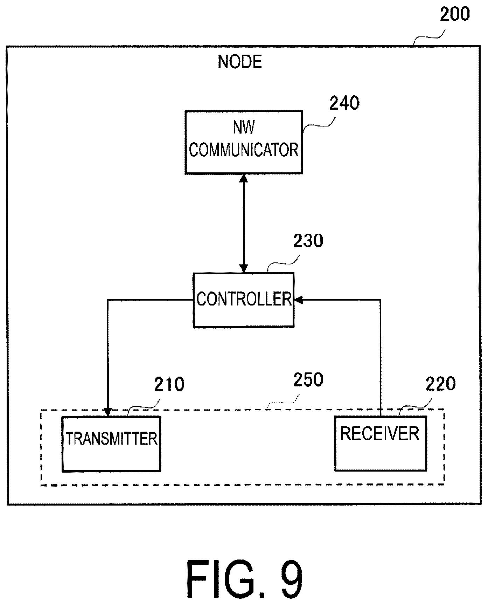

FIG. 9 is a diagram illustrating a configuration example of the node 200 (base station) according to the embodiment.

The node 200 includes a transmitter 210, a receiver 220, the controller 230, and a NW communicator 240. The transmitter 210 and the receiver 220 constitute a wireless communicator 250 that performs wireless communication with the UE 100.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processing in the node 200. The operations of the node 200 described above and below may be operations under control of the controller 230. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The NW communicator 240 is connected to adjacent nodes via an inter-node interface. The NW communicator 240 is connected to the CN apparatus 300 via a node-CN interface.

The node 200 configured as such performs wireless communication with the UE 100 using CA. The controller 230 configures SCells for the UE 100. The transmitter 210 transmits to the UE 100 information indicating a radio quality condition to be satisfied for the UE 100 to execute deactivation processing for each SCell. Thus, when the radio quality of the SCell satisfies the radio quality condition, the UE 100 can autonomously perform the deactivation processing for the SCell.

In the embodiment, the receiver 220 receives a notification relating to the deactivation processing from the UE 100 in response to the radio quality condition having been satisfied in the UE 100. For example, the receiver 220 receives the notification from the UE 100 over the PCell.

In the embodiment, the controller 230 stops the DL transmission processing (PDCCH transmission and PDSCH transmission) over the SCell when the notification relating to the deactivation processing is received or when an acknowledgment (HARQ ACK) to the notification is transmitted to the UE 100. Thus, compared to the general procedure illustrated in FIG. 7, the DL transmission processing can be stopped earlier, so that the above-described waste of resources and power consumption can be suppressed.

### (1.5) Operation Example of System

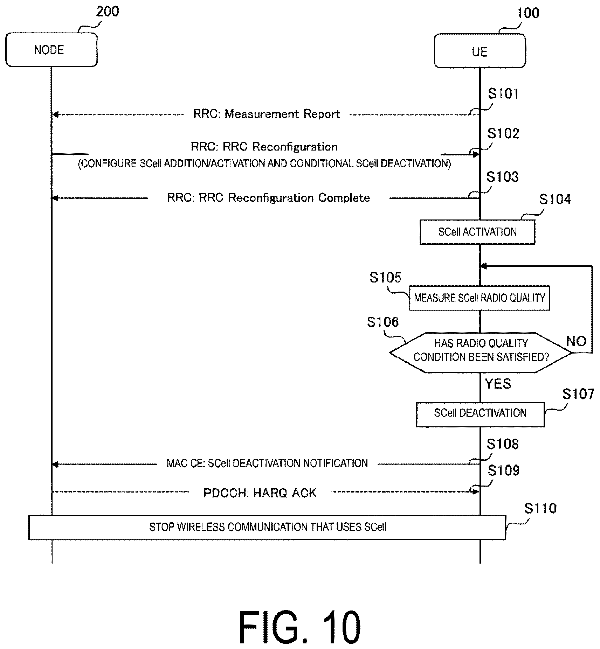

FIG. 10 is a diagram illustrating an operation example of a system according to the first embodiment. In FIG. 10, non-essential steps are indicated by broken lines. Duplicate descriptions of operations similar to those in FIGS. 6 and 7 will be omitted.

In step S101, the receiver 110 of the UE 100 receives a reference signal from each cell, the controller 130 of the UE 100 measures radio quality based on the reference signal, and the transmitter 120 of the UE 100 transmits a Measurement Report message including the measurement result to the node 200 over, for example, the PCell. Here, it is assumed that the Measurement Report message includes the measurement results of the THz wave cell. The receiver 220 of the node 200 receives the Measurement Report message.

In step S102, the controller 230 of the node 200 generates an RRC Reconfiguration message, and the transmitter 210 of the node 200 transmits the RRC Reconfiguration message to the UE 100 over, for example, the PCell. The receiver 110 of the UE 100 receives the RRC Reconfiguration message.

The RRC Reconfiguration message includes, for example, configuration information for adding an SCell, configuration information for configuring activation of the SCell (i.e., information for designating the active state as the initial state of the SCell), and configuration information for conditional SCell deactivation. Although the configuration information for adding the SCell, the configuration information for configuring activation of the SCell, and the configuration information for conditional SCell deactivation are transmitted in one RRC Reconfiguration message in the illustrated example, these pieces of information may be transmitted in different RRC Reconfiguration messages.

The configuration information for adding SCells may be sCellToAddModList that is a list of SCells to be added or changed. sCellToAddModList is a list that includes SCell configurations (SCellConfig) as entries. Each SCell configuration (SCellConfig) includes an index of the corresponding SCell (sCellIndex) and a configuration of the corresponding SCell (sCellConfigCommon and sCellConfigDedicated).

The configuration information for conditional SCell deactivation may be included in the SCell configuration (SCellConfig). The configuration information for conditional SCell deactivation may include information for configuring a frequency and/or a cell ID of the target SCell.

The configuration information for conditional SCell deactivation includes information indicating a radio quality condition to be satisfied for the UE 100 to deactivate the corresponding SCell.

The information indicating the radio quality condition may include at least one radio quality threshold value selected from the group consisting of, for example, an RSRP threshold value, an RSRQ threshold value, and an SINR threshold value. That the radio quality condition is satisfied for the SCell may mean at least one selected from the group consisting of that RSRP of the SCell goes below the RSRP threshold value, that RSRQ of the SCell goes below the RSRQ threshold value, and that an SINR of the SCell goes below the SINR threshold value.

The information indicating the radio quality condition may include a threshold value of a continuation time of a state where a radio problem is detected in a lower layer (e.g., PHY layer) in the UE 100. In this case, the radio quality condition being satisfied for the SCell may mean that the continuation time of the state where the radio problem is detected for the SCell has reached a threshold value.

The information indicating the radio quality condition may include a threshold value of the number of times that the UE 100 continues retransmission (i.e., the number of times that UL data transmission continues to fail). In this case, the radio quality condition being satisfied for the SCell may mean that the number of times that retransmission continues for the SCell (i.e., the number of times that UL data transmission continues to fail for the SCell) has reached the threshold value.

The information indicating the radio quality condition may include a threshold value of a time during which UL data transmission cannot be executed based on detection of an interference wave in the UE 100. When, for example, the SCell is operated in an unlicensed band, the UE 100 performs carrier sensing for the SCell, and performs UL data transmission only when there is an empty channel, and does not perform UL data transmission when there is no empty channel. In this case, the radio quality condition being satisfied for the SCell may mean that the time during which UL data transmission that uses carrier sense cannot be executed has reached the threshold value.

In step S103, the controller 130 of the UE 100 generates an RRC Reconfiguration Complete message, and the transmitter 210 of the UE 100 transmits the RRC Reconfiguration Complete message to the node 200 over, for example, the PCell. The receiver 220 of the node 200 receives the RRC Reconfiguration Complete message.

The initial state of the SCell added to the UE 100 may be the active state (step S104). After the SCell is added to the UE 100, the SCell may be activated by the MAC CE (step S104). Note that the controller 130 of the UE 100 starts radio quality measurement (e.g., RSRP measurement, RSRQ measurement, and/or SINR measurement) for the SCell based on the configuration information for conditional SCell deactivation.

In step S105, the receiver 110 of the UE 100 receives a reference signal of the SCell, and the controller 130 of the UE 100 measures radio quality based on the reference signal. The reference signal of the SCell may be a DeModulation Reference Signal (DMRS) included in an SSB (SS/PBCH Block) transmitted by the SCell, or may be a Tracking Reference Signal (TRS) that is a type of a CSI-RS. Measurement of radio quality may include at least one selected from the group of consisting of measurement of a continuation time of a state where a radio problem is detected, measurement of the number of times that retransmission continues (i.e., the number of times that UL data transmission continues to fail), and measurement of a time during which UL data transmission cannot be executed.

In step S106, the controller 130 of the UE 100 determines whether the radio quality condition configured in step S102 has been satisfied. For example, the controller 130 of the UE 100 compares the measurement result (e.g., RSRP, RSRQ, and/or an SINR) in step S105 with a radio quality threshold value configured in step S102, and, if the measurement result goes below the radio quality threshold value, determines that the radio quality condition has been satisfied. If it is determined that the radio quality condition is not satisfied (step S106: NO), processing returns to step S105.

On the other hand, if it is determined that the radio quality condition has been satisfied (step S106: YES), the controller 130 of the UE 100 deactivates the SCell in step S107. For example, the controller 130 of the UE 100 stops processing such as PDCCH monitoring for the SCell. Note that SCell deactivation may be performed at a time of reception of the acknowledgment (HARQ ACK) in step S109.

In step S108, the controller 130 of the UE 100 triggers transmission of an SCell deactivation notification, and the transmitter 120 of the UE 100 transmits the SCell deactivation notification to the node 200 over the PCell. The receiver 220 of the node 200 receives the SCell deactivation notification.

The SCell deactivation notification may be a newly introduced MAC CE. For example, the SCell deactivation notification includes an index value (that may be a cell ID) of the deactivated SCell. In this regard, the SCell deactivation notification may be a notification included in UCI transmitted over a PUCCH, may be a PDCP Control PDU, or may be a notification included in an RRC message.

The SCell deactivation notification may include an index of the activated SCell. The index may refer to each entry in the SCell configuration list configured in the RRC Reconfiguration. The cell ID of the activated SCell may be transmitted instead of the index. Alternatively, in a bitmap-like notification, each bit position may be associated with each SCell, and whether each bit (0/1) is activated may be indicated.

The SCell deactivation notification may include information of a timing at which SCell deactivation (i.e., step S107) has been performed. The timing information may be a radio frame number in which SCell deactivation has been executed, and may be expressed by any one or a combination of a system frame number, a subframe number, a slot number, and a symbol number. The timing information may be information of a time at which SCell deactivation has been executed. The timing information may be an elapsed time that passes until the SCell deactivation notification is transmitted after SCell deactivation is executed, may be expressed in seconds (e.g., milliseconds), or may be expressed in the number of radio frames (e.g., the number of slots). The node 200 can know based on such timing information when DL reception in the SCell has stopped, and can efficiently specify a retransmission target data packet when the PCell retransmits data DL-transmitted during the period.

Prior to transmission of the SCell deactivation notification, following processing may be performed in the PHY layer and the MAC layer. Specifically, the UE 100 transmits a Scheduling Request (SR) to the node 200, the node 200 transmits a UL grant for a Buffer Status Report (BSR) to the UE 100, the UE 100 transmits a BSR to the node 200, and the node 200 transmits a UL grant for PUSCH transmission to the UE 100. The UE 100 then transmits an SCell deactivation notification based on the UL grant for PUSCH transmission.

Note that, although an example where the UE 100 transmits the SCell deactivation notification to the node 200 over the PCell has been described, the UE 100 may also transmit the SCell deactivation notification to the node 200 over the SCell when deactivating the SCell at a time of reception of the acknowledgment (HARQ ACK).

In step S109, the transmitter 210 of the node 200 transmits a HARQ ACK indicating successful reception of the SCell deactivation notification to the UE 100 over a PDCCH of the PCell. The receiver 110 of the UE 100 receives the HARQ- ACK. Note that step S109 does not need to be performed if the SCell deactivation notification is UCI.

The node 200 recognizes that the SCell of the UE 100 has become unusable in response to reception of the SCell deactivation notification in step S108. In step S110, the node 200 stops DL transmission to the UE 100 via the SCell.

### (2) Second Embodiment

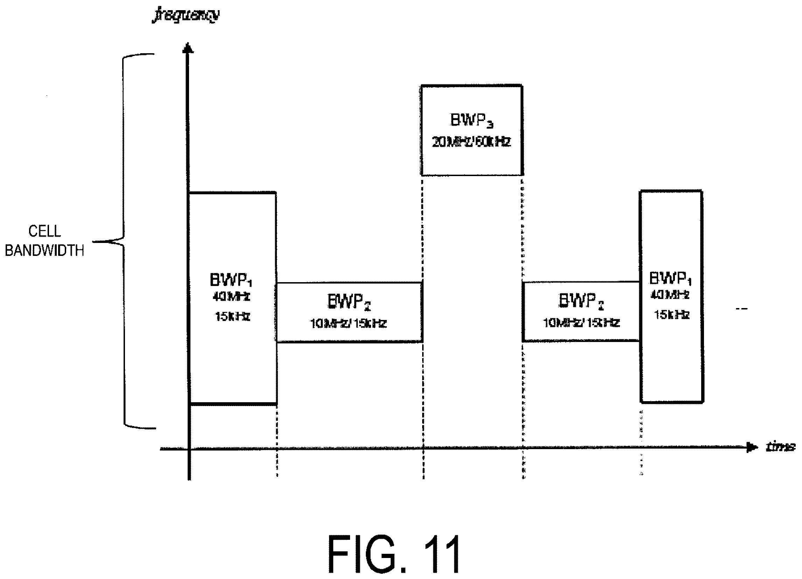

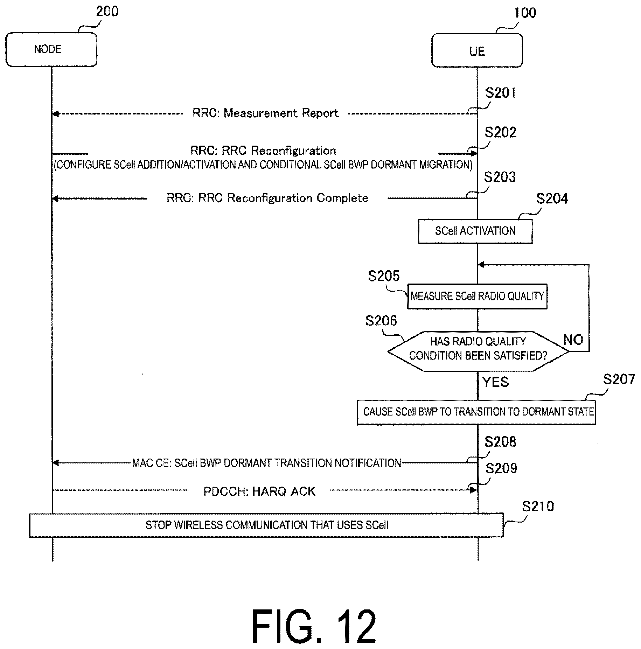

Differences of a second embodiment from the first embodiment will be described with reference to FIGs. 11 and 12.

### (2.1) BWP

FIG. 11 is a diagram for describing a BWP.

Bandwidth Adaptation (BA) allows the transmission and reception bandwidth of the UE 100 to be adjusted without needing to be as large as the bandwidth of the cell. Part of a cell bandwidth (that may be referred to as a "system bandwidth" or a "carrier bandwidth") is referred to as a BWP. In BA, the node 200 configures one or more BWPs within the cell to the UE 100, and notifies the UE 100 which of the configured BWPs is currently active. The BWP includes an initial BWP to be used for initial access and a dedicated BWP to be individually configured to the UE 100. The bandwidth and the subcarrier spacing of each BWP can be variably configured.

In the illustrated example, three different BWPs are configured for the UE 100, and an example is illustrated where the active BWP is switched between these BWPs. A BWP₁ has a width of 40 MHz and a subcarrier spacing of 15 kHz, a BWP₂ has a width of 10 MHz and a subcarrier spacing of 15 kHz, and a BWP₃ has a width of 20 MHz and a subcarrier spacing of 60 kHz.

In each of the UL and DL, there is only one BWP in the active state, and the rest are in the inactive state. In a BWP in the inactive state, the UE 100 does not monitor the PDCCH, and does not transmit the PUCCH, the PRACH, or the UL-SCH (PUSCH).

In the case of CA, the node 200 can configure BWPs in the dormant state (dormant BWPs) for SCells. When the active BWP of the activated SCell is a BWP in the dormant state, the UE 100 stops PDCCH monitoring and SRS/PUSCH/PUCCH transmission in the SCell, but continues to execute CSI measurement, AGC, and beam management. PDCCH/DCI is used to control entering and leaving the dormant BWP for the SCell. Note that the BWP in the dormant state is one of the dedicated BWPs of the UE 100 that the node 200 has configured via dedicated RRC signaling.

### (2.2) Operation Example of System

The UE 100 according to the second embodiment performs wireless communication with the node 200 using CA similarly to the first embodiment. The receiver 110 receives, from the node 200, information indicating a radio quality condition to be satisfied for the UE 100 to execute deactivation processing for the SCell configured for the UE 100. The controller 130 measures radio quality of the SCell and evaluates whether the radio quality condition is satisfied. The controller 130 performs deactivation processing for the SCell in response to the radio quality condition having been satisfied. In the second embodiment, the deactivation processing includes dormant transition processing of causing a BWP in a non-dormant state in the SCell to the dormant state.

According to the second embodiment, the controller 130 of the UE 100 causes a BWP in the non-dormant state to transition to the dormant state for the SCell in the active state in response to the radio quality condition configured by the node 200 having been configured. Thus, the UE 100 can cause a BWP in the non-dormant state to autonomously transition to the dormant state without transmitting the Measurement Report message to the node 200 and receiving DCI indicating transition of the dormant BWP.

FIG. 12 is a diagram illustrating an operation example of a system according to the second embodiment. In FIG. 12, non-essential steps are indicated by broken lines. Duplicate descriptions of operations similar to those in the first embodiment will be omitted.

In step S201, the receiver 110 of the UE 100 receives a reference signal from each cell, the controller 130 of the UE 100 measures radio quality based on the reference signal, and the transmitter 120 of the UE 100 transmits a Measurement Report message including the measurement result to the node 200 over, for example, the PCell. Here, it is assumed that the Measurement Report message includes the measurement results of the THz wave cell. The receiver 220 of the node 200 receives the Measurement Report message.

In step S202, the controller 230 of the node 200 generates an RRC Reconfiguration message, and the transmitter 210 of the node 200 transmits the RRC Reconfiguration message to the UE 100 over, for example, the PCell. The receiver 110 of the UE 100 receives the RRC Reconfiguration message.

The RRC Reconfiguration message includes, for example, configuration information for adding SCells, configuration information for designating the active state as the initial state of the SCell, configuration information for configuring a BWP (a dedicated BWP) for the SCell, and configuration information for conditional dormant BWP transition. Although the configuration information for adding the SCell, the configuration information for designating the active state as the initial state of the SCell, the configuration information for configuring the BWP (dedicated BWP) for the SCell, and the configuration information for conditional dormant BWP transition are transmitted in one RRC Reconfiguration message in the illustrated example, these pieces of information may be transmitted in different RRC Reconfiguration messages.

The configuration information for adding SCells may be sCellToAddModList that is a list of SCells to be added or changed. sCellToAddModList is a list that includes SCell configurations (SCellConfig) as entries. Each SCell configuration (SCellConfig) includes an index of the corresponding SCell (sCellIndex) and a configuration of the corresponding SCell (sCellConfigCommon and sCellConfigDedicated). The configuration information for designating the active state as the initial state of the SCell, the configuration information for configuring the BWP (dedicated BWP) for the SCell, and the configuration information for conditional dormant BWP transition may be included in the SCell configuration (SCellConfig).

The configuration information for conditional dormant BWP transition includes information indicating the radio quality condition to be satisfied to cause the BWP to transition to the dormant state in a case where an active BWP of a corresponding SCell in the active state is a non-dormant BWP. The information indicating the radio quality condition may include at least one radio quality threshold value selected from the group consisting of an RSRP threshold value, an RSRQ threshold value, and an SINR threshold value. The information indicating the radio quality condition may include at least one selected from the group consisting of a threshold value of a continuation time of a state where a radio problem is detected, a threshold value of the number of times that the UE 100 continues retransmissions (i.e., the number of times that UL data transmission continues to fail), and a threshold value of a time during which UL data transmission cannot be executed based on detection of an interference wave.

In the second embodiment, the initial state of the active BWP of the SCell added to the UE 100 is the non-dormant state. The controller 130 of the UE 100 starts measuring radio quality for the SCell based on the configuration information for conditional dormant BWP transition.

In step S203, the controller 130 of the UE 100 generates an RRC Reconfiguration Complete message, and the transmitter 210 of the UE 100 transmits the RRC Reconfiguration Complete message to the node 200 over, for example, the PCell. The receiver 220 of the node 200 receives the RRC Reconfiguration Complete message.

The initial state of the SCell added to the UE 100 may be the active state (step S204). After the SCell is added to the UE 100, the SCell may be activated by the MAC CE (step S204).

In step S205, the receiver 110 of the UE 100 receives a reference signal of each SCell, and the controller 130 of the UE 100 measures radio quality based on the reference signal. The reference signal of the SCell may be a DMRS included in an SSB transmitted by the SCell or may be a TRS. Measurement of radio quality may include at least one selected from the group of consisting of measurement of a continuation time of a state where a radio problem is detected, measurement of the number of times that retransmission continues, and measurement of a time during which UL data transmission cannot be executed.

In step S206, the controller 130 of the UE 100 determines whether the radio quality condition configured in step S202 has been satisfied. Specifically, the controller 130 of the UE 100 compares the measurement result (e.g., RSRP, RSRQ, and/or an SINR) in step S205 with a radio quality threshold value configured in step S202, and, if the measurement result goes below the radio quality threshold value, determines that the radio quality condition has been satisfied. If it is determined that the radio quality condition is not satisfied (step S206: NO), processing returns to step S205.

On the other hand, if it is determined that the radio quality condition has been satisfied (step S206: YES), the controller 130 of the UE 100 causes the SCell to transition to the dormant state (i.e., switches the non-dormant state to the dormant state) in step S207.

In step S208, the controller 130 of the UE 100 triggers transmission of an SCell BWP dormant transition notification, and the transmitter 120 of the UE 100 transmits the SCell BWP dormant transition notification to the node 200 over the PCell. The receiver 220 of the node 200 receives the SCell BWP dormant transition notification.

The SCell BWP dormant transition notification may include information of a timing at which the SCell BWP dormant transition (i.e., step S207) has been performed. The timing information may be a radio frame number in which the SCell BWP dormant transition has been executed, and may be expressed by any one or a combination of a system frame number, a subframe number, a slot number, and a symbol number. The timing information may be information of a time at which the SCell BWP dormant transition has been executed. The timing information may be an elapsed time that passes until the SCell BWP dormant transition notification is transmitted after SCell BWP dormant transition is executed, may be expressed in seconds (e.g., milliseconds), or may be expressed in the number of radio frames (e.g., the number of slots). The node 200 can know based on such timing information when DL reception in the SCell has stopped, and can efficiently specify a retransmission target data packet when the PCell retransmits data DL-transmitted during the period.

The SCell BWP dormant transition notification may be a newly introduced MAC CE. The SCell BWP dormant transition notification includes an index value (that may be a cell ID) of the SCell that has transitioned to the dormant BWP and/or a BWP ID of the BWP. The SCell BWP dormant transition notification may be a notification included in UCI transmitted over a PUCCH, may be a PDCP Control PDU, or may be a notification included in an RRC message.

Prior to transmission of the SCell BWP dormant transition notification, following processing may be performed in the PHY layer and the MAC layer. Specifically, the UE 100 transmits an SR to the node 200, the node 200 transmits a UL grant for a BSR to the UE 100, the UE 100 transmits a BSR to the node 200, and the node 200 transmits a UL grant for PUSCH transmission to the UE 100. The UE 100 transmits an SCell BWP dormant transition notification based on the UL grant for PUSCH transmission.

Note that, although an example where the UE 100 transmits the SCell BWP dormant transition notification to the node 200 over the PCell has been described, the UE 100 may also transmit the SCell BWP dormant transition notification to the node 200 over the SCell.

In step S209, the transmitter 210 of the node 200 transmits a HARQ ACK indicating successful reception of the SCell BWP dormant transition notification to the UE 100 over a PDCCH of the PCell. The receiver 110 of the UE 100 receives the HARQ- ACK. Note that step S209 does not need to be performed if the SCell BWP dormant transition notification is UCI.

The node 200 recognizes that the active BWP of the SCell of the UE 100 has become unusable in response to reception of the SCell BWP dormant transition notification in step S208. In step S210, the node 200 stops DL transmission on the active BWP of the SCell.

### (3) Third Embodiment

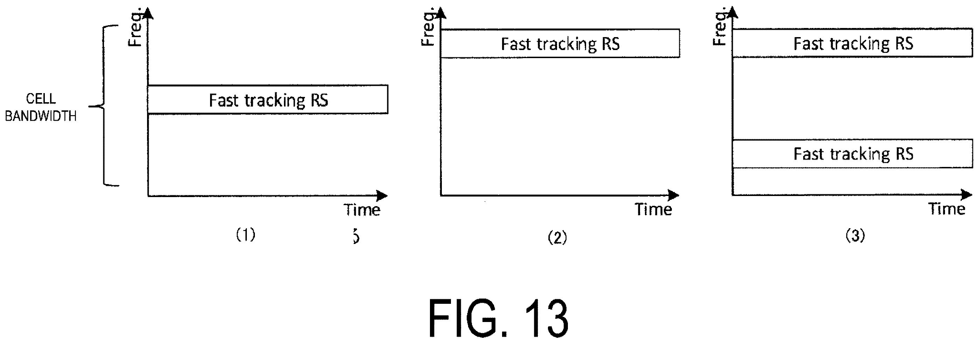

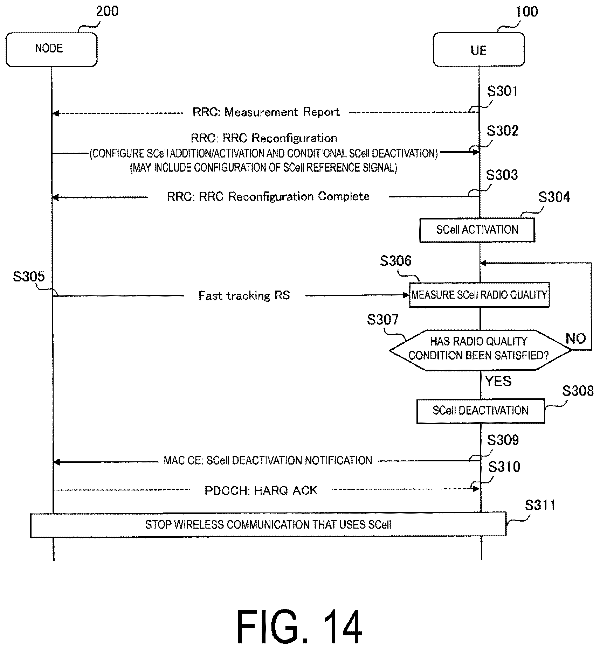

Differences of a third embodiment from the above-described embodiments will be mainly described with reference to FIGs. 13 and 14. The third embodiment is an embodiment based on the above-described first embodiment. In this regard, the third embodiment may be an embodiment based on the above-described second embodiment.

In the above-described embodiments, the UE 100 detects that the radio quality of the SCell has satisfied the predetermined quality, and performs SCell deactivation or dormant BWP transition. To quickly detect that the radio quality of the SCell has satisfied the predetermined quality, it is desirable that the UE 100 is able to constantly measure the radio quality of the SCell. Although the example where the UE 100 measures the radio quality (RSRP or the like) using the SSB or the TRS (CSI-RS) as a reference signal has been described in the above-described embodiments, these reference signals are transmitted temporally discretely. Therefore, at a timing at which an SSB or a CSI-RS is not transmitted, the UE 100 cannot measure wireless communication, and delay may occur at a time to detect that the radio quality of the SCell has satisfied the predetermined quality.

Hence, in the third embodiment, the transmitter 210 of the node 200 transmits a reference signal (also referred to as a "Fast tracking RS") used to measure radio quality continuously in the time domain over the SCell. The receiver 110 of the UE 100 receives the Fast tracking RS continuously transmitted in the time domain over the SCell from the node 200. The controller 130 of the UE 100 measures the radio quality of the SCell based on the Fast tracking RS. Thus, the above-described delay can be suppressed.

FIG. 13 is a diagram illustrating a specific example of the Fast tracking RS according to the third embodiment. As for the Fast tracking RS according to the third embodiment, the Fast tracking RS is mapped on some frequency resources of the bandwidth of the cell (SCell).

In an example in (1) in FIG. 13, the Fast Tracking RS is mapped on one or more resource blocks at the center of the bandwidth of the SCell, or on one or more subcarriers at the center of the bandwidth of the SCell. In an example in (2) in FIG. 13, the Fast Tracking RS is mapped on one or more resource blocks on one end side of the bandwidth of the SCell, or on one or more subcarriers on one end side of the bandwidth of the SCell. In an example in (3) in FIG. 13, the Fast Tracking RS is mapped on one or more resource blocks on both end sides of the bandwidth of the SCell, or on one or more subcarriers on the both end sides of the bandwidth of the SCell.

FIG. 14 is a diagram illustrating an operation example of the system according to the third embodiment. In FIG. 14, non-essential steps are indicated by broken lines. Duplicate descriptions of operations similar to those in the above-described first embodiment will be omitted.

In step S301, the transmitter 120 of the UE 100 transmits a Measurement Report message to the node 200 over, for example, the PCell. The receiver 220 of the node 200 receives the Measurement Report message.

In step S302, the transmitter 210 of the node 200 transmits an RRC Reconfiguration message to the UE 100 over, for example, the PCell. The receiver 110 of the UE 100 receives the RRC Reconfiguration message.

In the third embodiment, the RRC Reconfiguration message may include configuration information relating to the Fast tracking RS in addition to the information described in the above-described first embodiment. The configuration information relating to the fast tracking RS includes at least one selected from the group consisting of information indicating the presence or absence of a fast tracking RS, information indicating the position of the fast tracking RS on the frequency axis (e.g., a resource block number, a subcarrier number, and/or an Absolute Radio-Frequency Channel Number (ARFCN)), and information for assisting demodulation of the fast tracking RS (e.g., a root sequence number indicating a signal sequence of a reference signal, and the like).

The node 200 may broadcast the configuration information relating to a Fast tracking RS in a System Information Block (SIB) of the PCell.

In step S303, the transmitter 210 of the UE 100 transmits an RRC Reconfiguration Complete message to the node 200 over, for example, the PCell. The receiver 220 of the node 200 receives the RRC Reconfiguration Complete message.

The initial state of the SCell added to the UE 100 may be the active state (step S304). After the SCell is added to the UE 100, the SCell may be activated by the MAC CE (step S304).

In step S305, the transmitter 210 of the node 200 transmits a steady Fast tracking RS on the time axis in a high speed detection target SCell. The receiver 110 of the UE 100 receives the Fast tracking RS over the SCell.

In step S306, the controller 130 of the UE 100 measures radio quality based on the Fast tracking RS of the SCell.

In step S307, the controller 130 of the UE 100 determines whether the radio quality condition configured in step S302 has been satisfied. If it is determined that the radio quality condition is not satisfied (step S307: NO), processing returns to step S306.

If it is determined that the radio quality condition has been satisfied (step S307: YES), the controller 130 of the UE 100 autonomously deactivates the SCell in step S308.

In step S309, the transmitter 120 of the UE 100 transmits an SCell deactivation notification to the node 200 over the PCell. The receiver 220 of the node 200 receives the SCell deactivation notification.

In step S310, the transmitter 210 of the node 200 transmits a HARQ ACK indicating successful reception of the SCell deactivation notification to the UE 100 over a PDCCH of the PCell. The receiver 110 of the UE 100 receives the HARQ- ACK. Note that step S308 does not need to be performed if the SCell deactivation notification is UCI.

In step S311, the node 200 stops the DL transmission via the SCell to the UE 100 by the node 200.

### (4) Other Embodiments

The above-described first embodiment to third embodiment may be implemented independently, or two or more of the embodiments may be combined and implemented.

Although examples where the SCell is a THz wave cell have been mainly described in the above-described embodiments, the SCell is not limited to a THz wave cell. For example, the SCell may be an mmW cell.

The UE 100 may be a Mobile Termination (MT) of an Integrated Access and Backhaul (IAB) node. In this case, the IAB MT may be connected to a first node, and the first node may be connected to a second node. The first node may transmit a notification indicating a radio link failure of a backhaul link between the first node and the second node to the IAB MT. When the notification is received, the IAB MT may determine that the radio quality condition has been satisfied and perform SCell deactivation (or dormant BWP transition).

The operational flows in the above-described embodiments do not necessarily have to be executed in chronological order according to the order described in the flowcharts. For example, steps in the operations may be executed in a different order than that described in the flowcharts or may be executed in parallel. Some of the steps in the operations may be removed and additional steps may be added to the processing.

A program may be provided that causes a computer (the UE 100 and the node 200) to execute the operations according to the above-described embodiments. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, but may be, for example, a recording medium such as a CD-ROM or a DVD-ROM.

As used in the present disclosure, the phrases "based on" and "depending on/in response to" do not mean "based only on" or "only depending on/only in response to", unless expressly stated otherwise. The phrase "based on" means both "based only on" and "based at least in part on." Similarly, the phrase "depending on/in response to" means both "only depending on/only in response to" and "at least partially depending on/in response to." The terms "include", "comprise", and variations thereof do not mean to include only the items listed, but may include only the items listed, or may include additional items in addition to the items listed. The term "or" used in the present disclosure is not intended to be "exclusive or." Any reference to an element using a designation such as "first", "second", and the like as used in the present disclosure does not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

Embodiments have been described above in detail with reference to the drawings, but specific configurations are not limited to those described above, and various design variation can be made without departing from the gist of the present disclosure.

### (5) Supplementary Note

Features relating to the above-described embodiments are described below as supplements.

### Supplementary Note 1

A user equipment for performing wireless communication with a node using carrier aggregation in a mobile communication system, the user equipment including:
a receiver configured to receive, from the node, information indicating a radio quality condition to be satisfied for the user equipment to execute deactivation processing for a secondary cell configured for the user equipment; and
a controller configured to measure radio quality and evaluate whether the radio quality condition has been satisfied,
wherein the controller is configured to execute the deactivation processing for the secondary cell in response to the radio quality condition having been satisfied.

### Supplementary Note 2

The user equipment according to Supplementary Note 1, wherein the deactivation processing includes processing of causing the secondary cell in an active state to transition to an inactive state.

### Supplementary Note 3

The user equipment according to Supplementary Note 1 or 2, the deactivation processing includes processing of causing a bandwidth part in a non-dormant state in the secondary cell to transition to a dormant state.

### Supplementary Note 4

The user equipment according to any one of Supplementary Notes 1 to 3 further includes a transmitter configured to transmit a notification relating to the deactivation processing to the node in response to the radio quality condition having been satisfied.

### Supplementary Note 5

The user equipment according to Supplementary Note 4, wherein the transmitter is configured to transmit the notification to the node over a primary cell.

### Supplementary Note 6

The user equipment according to Supplementary Note 4 or 5, wherein the controller is configured to stop Physical Downlink Control CHannel (PDCCH) monitoring for the secondary cell when the radio quality condition is satisfied or when an acknowledgment to the notification is received from the node.

### Supplementary Note 7

The user equipment according to any one of Supplementary Notes 1 to 6, wherein
the receiver is configured to receive a reference signal transmitted continuously in a time domain over the secondary cell from the node, and
the controller is configured to measure the radio quality based on the reference signal.

### Supplementary Note 8

A node for performing wireless communication with a user equipment using carrier aggregation in a mobile communication system, the node including:
a controller configured to configure a secondary cell for the user equipment; and
a transmitter configured to transmit, to the user equipment, information indicating a radio quality condition to be satisfied for the user equipment to execute deactivation processing for the secondary cell.

### Supplementary Note 9

The node according to Supplementary Note 8, wherein the deactivation processing includes processing of causing the secondary cell in an active state to transition to an inactive state.

### Supplementary Note 10

The node according to Supplementary Note 8 or 9, wherein the deactivation processing includes processing of causing a bandwidth part in a non-dormant state in the secondary cell to transition to a dormant state.

### Supplementary Note 11

The node according to any one of Supplementary Notes 8 to 10 further includes a receiver configured to receive a notification relating to the deactivation processing from the user equipment in response to the radio quality condition having been satisfied in the user equipment.

### Supplementary Note 12

The node according to Supplementary Note 11, wherein the receiver is configured to receive the notification from the user equipment over a primary cell.

### Supplementary Note 13

The node according to Supplementary Note 11 or 12, wherein the controller is configured to stop processing of downlink transmission over the secondary cell when the notification is received or when an acknowledgment to the notification is transmitted to the user equipment.

### Supplementary Note 14

The node according to any one of supplementary Notes 8 to 13, wherein the transmitter is configured to transmit a reference signal used to measure the radio quality continuously in a time domain over the secondary cell.

### Supplementary Note 15

A communication method used in a user equipment configured to perform wireless communication with a node using carrier aggregation in a mobile communication system, the communication method including the steps of:
receiving, from the node, information indicating a radio quality condition to be satisfied for the user equipment to execute deactivation processing for a secondary cell configured for the user equipment;
measuring radio quality and evaluating whether the radio quality condition has been satisfied; and
executing the deactivation processing for the secondary cell in response to the radio quality condition having been satisfied.

### Supplementary Note 16

A communication method used in a node configured to perform wireless communication with a user equipment using carrier aggregation in a mobile communication system, the communication method including the steps of:
configuring a secondary cell for the user equipment; and
transmitting, to the user equipment, information indicating a radio quality condition to be satisfied for the user equipment to execute deactivation processing for the secondary cell.

### REFERENCE SIGNS

1: Network
10: RAN
20: CN
100: UE
110: Receiver
120: Transmitter
130: Controller
140: Wireless communicator
200: Node
210: Transmitter
220: Receiver
230: Controller
240: NW communicator
250: Wireless communicator
300: CN apparatus

## Claims

1. A user equipment for performing wireless communication with a node using carrier aggregation in a mobile communication system, the user equipment comprising:
a receiver configured to receive, from the node, information indicating a radio quality condition to be satisfied for the user equipment to execute deactivation processing for a secondary cell configured for the user equipment; and
a controller configured to measure radio quality and evaluate whether the radio quality condition has been satisfied,
wherein the controller is configured to execute the deactivation processing for the secondary cell in response to the radio quality condition having been satisfied.

2. The user equipment according to claim 1, wherein the deactivation processing comprises processing of causing the secondary cell in an active state to transition to an inactive state.

3. The user equipment according to claim 1, wherein the deactivation processing comprises processing of causing a bandwidth part in a non-dormant state in the secondary cell to transition to a dormant state.

4. The user equipment according to any one of claims 1 to 3, further comprising a transmitter configured to transmit a notification relating to the deactivation processing to the node in response to the radio quality condition having been satisfied.

5. The user equipment according to claim 4, wherein the transmitter is configured to transmit the notification to the node over a primary cell.

6. The user equipment according to claim 4, wherein the controller is configured to stop Physical Downlink Control CHannel (PDCCH) monitoring for the secondary cell when the radio quality condition is satisfied or when an acknowledgment to the notification is received from the node.

7. The user equipment according to claim 1, wherein
the receiver is configured to receive a reference signal transmitted continuously in a time domain over the secondary cell from the node, and
the controller is configured to measure the radio quality based on the reference signal.

8. A node for performing wireless communication with a user equipment using carrier aggregation in a mobile communication system, the node comprising:
a controller configured to configure a secondary cell for the user equipment; and
a transmitter configured to transmit, to the user equipment, information indicating a radio quality condition to be satisfied for the user equipment to execute deactivation processing for the secondary cell.

9. The node according to claim 8, wherein the deactivation processing comprises processing of causing the secondary cell in an active state to transition to an inactive state.

10. The node according to claim 8, wherein the deactivation processing comprises processing of causing a bandwidth part in a non-dormant state in the secondary cell to transition to a dormant state.

11. The node according to any one of claims 8 to 10, further comprising a receiver configured to receive a notification relating to the deactivation processing from the user equipment in response to the radio quality condition having been satisfied in the user equipment.

12. The node according to claim 11, wherein the receiver is configured to receive the notification from the user equipment over a primary cell.

13. The node according to claim 11, wherein the controller is configured to stop processing of downlink transmission over the secondary cell when the notification is received or when an acknowledgment to the notification is transmitted to the user equipment.

14. The node according to claim 8, wherein the transmitter is configured to transmit a reference signal used to measure the radio quality continuously in a time domain over the secondary cell.

15. A communication method used in a user equipment configured to perform wireless communication with a node using carrier aggregation in a mobile communication system, the communication method comprising the steps of:
receiving, from the node, information indicating a radio quality condition to be satisfied for the user equipment to execute deactivation processing for a secondary cell configured for the user equipment;
measuring radio quality and evaluating whether the radio quality condition has been satisfied; and
executing the deactivation processing for the secondary cell in response to the radio quality condition having been satisfied.

16. A communication method used in a node configured to perform wireless communication with a user equipment using carrier aggregation in a mobile communication system, the communication method comprising the steps of:
configuring a secondary cell for the user equipment; and
transmitting, to the user equipment, information indicating a radio quality condition to be satisfied for the user equipment to execute deactivation processing for the secondary cell.
